# EUROPEAN PATENT APPLICATION

(11) **EP 3 822 883 A1**
(43) Date of publication of application: **19.05.2021**
(21) Application number: 19833273.6
(22) Date of filing: 27.05.2019
(51) Int. Cl.: G06Q 10/06

(54) **PROJECT ASSISTANCE SYSTEM, PROJECT ASSISTANCE DEVICE, AND PROJECT ASSISTANCE METHOD**

(30) Priority: 13.07.2018 JP 2018133072
(71) Applicant: Hitachi, Ltd., Tokyo 100-8280 (JP)
(72) Inventor: KAWAKAMI, Masumi, Tokyo 100-8280 (JP)
(74) Representative: Mewburn Ellis LLP
(86) International application number: PCT/JP2019/020867
(87) International publication number: WO 2020/012795

(57) **Abstract**

There is provided a project assistance system capable of improving the efficiency of project management. A correspondence estimation processing unit 112 calculates correspondence information between project plan information and project execution information along with a reliability, based on a comparison result between the project plan information in which a plan of a project is described, and the project execution information in which execution of the project is described. An information consistency check unit 113 checks the consistency based on the reliability of the correspondence relation estimated by the correspondence estimation processing unit 112. A user interface 111 displays information for specifying a task associated with a process along with process information, displays information regarding a task associated with an architecture along with architecture information, and displays person-in-charge information of the architecture along with the architecture information.

## Description

### Technical Field

The present invention relates to a project assistance system, a project assistance device, and a project assistance method applicable to assist management of a development project.

### Background Art

In a software development project, a project manager grasps the work status of many development members and takes actions such as assignment of a work, addition of resources, and follow-up work. However, when there are many development members in large-scale software development, or when a development team is distributed to remote sites, it is difficult for the project manager to grasp the accurate work situation. In the related art, the project manager grasps information by aggregating oral or written work reports of development members. However, since such a manner lacks accuracy and a breaking-news property, in recent years, a management system that assists software development is used in many cases.

There are a development process management system and a task management system as a system that manages the work status of a project. The development process management system is a system in which it is possible to check how much there is a difference between the plan and the actual result by dividing a development period into a plurality of processes and setting a development phase start date and a development phase completion date. The task management system is a system in which a work to be performed by development members is registered as a task, the development members register a start date and a completion date of each task and the task status, and the project manager aggregates and checks information. It is common to use these systems, and open source and commercial tools are widespread.

In addition, there is a source code configuration management system as a system that manages the deliverables of a development project. The source code created by the development members is registered in the source code configuration management system of the development project. Each time the development member changes the registered source code, the development member registers the changed file, the change date and time, the comment, and the name of the person who has made the change. The development members including the project manager can use the history of changes of the registered source code as a reference. It is common to use the source code configuration management system, and open source and commercial tools are widespread.

In addition, it is common practice to define an architecture in which the software to be developed is divided into elements, form a team, and use the architecture as a reference for information aggregation. However, at present, the system that manages architecture design information is not widely used and is often defined in documents. The project manager assigns the generated tasks to the development team, and the leader of each development team re-assigns the tasks to the development members who actually perform the work.

PTL 1 proposes a method of visualizing the progress of a process by defining the relation between an output document and the process.

### Citation List

### Patent Literature

PTL 1: JP 2003-141320 A

### Summary of Invention

### Technical Problem

However, in the conventional project management, the project manager needs to refer to the information of a plurality of management systems, grasp the status of the development project, and detect the occurring problems. However, such a work takes time, many of the occurring problems are overlooked, and it is difficult for busy project managers to perform the work.

The present invention has been made in view of the above circumstances, and an object of the present invention is to provide a project assistance system, a project assistance device, and a project assistance method capable of improving the efficiency of project management.

### Solution to Problem

In order to achieve the above object, a project assistance system that calculates a state of a project by using a plurality of pieces of management information includes a processor, and a storage device. The storage device stores project plan information in which a plan of the project is described, and project execution information in which execution of the project is described. The processor calculates correspondence information between the project plan information and the project execution information along with a reliability of a correspondence relation, and outputs information of the project along with the reliability of the correspondence relation, based on the correspondence information.

### Advantageous Effects of Invention

According to the present invention, it is possible to provide a project assistance system capable of improving the efficiency of project management.

### Brief Description of Drawings

[FIG. 1] FIG. 1 is a block diagram illustrating a configuration of a project assistance system according to a first embodiment.
[FIG. 2] FIG. 2 is a diagram illustrating an example of a relation between a process, a task, and an architecture, which are managed by the project assistance system of FIG. 1.
[FIG. 3] FIG. 3 is a diagram illustrating an example of an information summary screen displayed in a user interface of FIG. 1.
[FIG. 4] FIG. 4 is a diagram illustrating an example of a method of constructing a correspondence database according to the first embodiment.
[FIG. 5] FIG. 5 is a diagram illustrating an example of a method of constructing a correspondence database according to a second embodiment.
[FIG. 6] FIG. 6 is a diagram illustrating an example of a method of constructing a correspondence database according to a third embodiment.
[FIG. 7] FIG. 7 is a block diagram illustrating an example of a hardware configuration of the project assistance device of FIG. 1.

### Description of Embodiments

Embodiments will be described with reference to the drawings. Note that, the embodiments described below do not limit the invention according to the claims, and all the elements and combinations described in the embodiments are not necessarily essential for the solution of the invention.

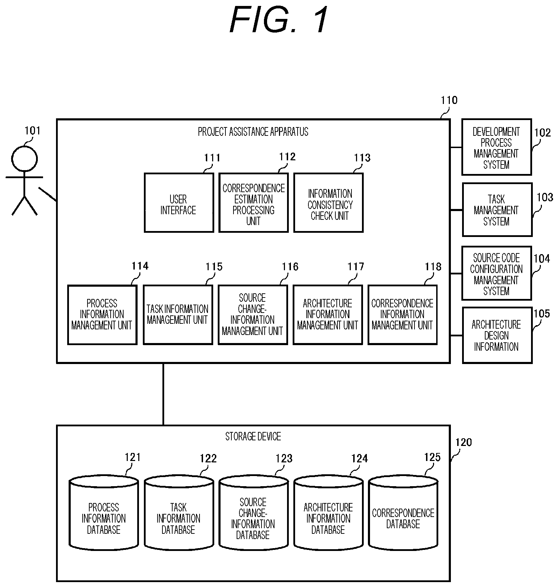

FIG. 1 is a block diagram illustrating a configuration of a project assistance system according to a first embodiment.

In FIG. 1, the project assistance system includes a project assistance device 110, a storage device 120, a development process management system 102, a task management system 103, a source code configuration management system 104, and architecture design information 105.

The project assistance device 110 calculates the state of a project using a plurality of pieces of management information. The project assistance device 110 includes a user interface 111, a correspondence estimation processing unit 112, an information consistency check unit 113, a process information management unit 114, a task information management unit 115, a source change-information management unit 116, an architecture information management unit 117 and a correspondence information management unit 118. The storage device 120 includes a process information database 121, a task information database 122, a source change-information database 123, an architecture information database 124, and a correspondence database 125.

The project assistance device 110 is connected to the storage device 120, the development process management system 102, the task management system 103, and the source code configuration management system 104. In addition, the project assistance device 110 can access the architecture design information 105.

The development process management system 102 is a system in which a project manager 101 can check how much there is a difference between the plan and the actual result by dividing a development period of software into a plurality of processes and setting a development phase start date and a development phase completion date. The task management system 103 is a system in which the project manager 101 registers a work to be performed by a person in charge, as a task, the person in charge being a development member registers the start date and the completion date of each task and the task status, and the project manager 101 aggregates and checks information. A task is defined to belong to a process. The task can include, for example, a work of changing an architecture, coding, creation of a document, and environment maintenance.

The source code configuration management system 104 is a system in which, each time the person in charge being a development member changes the registered source code, the person in charge registers the changed file and the change date and time, a comment, and the name of a person who performs the change, and the project manager 101 can use the history of the change of the source code as a reference. The architecture design information 105 is information for defining an architect in which software to be developed is divided into elements, and information when the project manager 101 forms a team or uses it as a reference for information aggregation.

The project manager 101 uses the project assistance device 110 through the user interface 111. The project assistance device 110 cooperates with the development process management system 102, the task management system 103, the source code configuration management system 104, and the architecture design information 105, to collect a plurality of pieces of management information.

The process information management unit 114 manages process information collected from the development process management system 102. The task information management unit 115 manages task information collected from the task management system 103. The source change-information management unit 116 manages source change information collected from the source code configuration management system 104. The architecture information management unit 117 manages architecture information acquired from the architecture design information 105. The correspondence information management unit 118 manages correspondence information between project plan information and project execution information estimated by the correspondence estimation processing unit 112.

In the project plan information, a plan of a project is described. The project plan information is information created at the planning stage of a project. The project plan information can include the process information and the architecture information. The process information can be created by the project manager 101. The architecture information can be created by an architect and the project manager 101.

In the project execution information, execution of a project is described. The project execution information is information created in a work of a person in charge who is a development member of the project. The project execution information can include the task information and the source change information.

The process information obtained from the development process management system 102 is stored in the process information database 121 through the process information management unit 114. The task information obtained from the task management system 103 is stored in the task information database 122 through the task information management unit 115. The source change information obtained from the source code configuration management system 104 is stored in the source change-information database 123 through the source change-information management unit 116. The architecture information obtained from the architecture design information 105 is stored in the architecture information database 124 through the architecture information management unit 117.

The correspondence estimation processing unit 112 receives information from the process information management unit 114, the task information management unit 115, the source change-information management unit 116, and the architecture information management unit 117. The correspondence estimation processing unit performs estimation processing, and then stores information in the correspondence database 125 through the correspondence information management unit 118. At this time, the correspondence estimation processing unit 112 can calculate the correspondence information between the project plan information and the project execution information based on a result of comparison between the project plan information in which the plan of a project is described and the project execution information in which the execution of the project is described. In addition, the correspondence estimation processing unit 112 can also calculate the reliability of the correspondence relation between the project plan information and the project execution information.

Examples of the comparison target between the project plan information and the project execution information include the date of a work, a person in charge of the work, a storage position of data obtained by the work, a comment and a description at the time of the work, and the like. The date of a work may be the work planned date or the actual work date. The work planned date can include a planned start date and a planned completion date. The actual work date, the actual start date, and the actual completion date can be included.

The information consistency check unit 113 receives information from the process information management unit 114, the task information management unit 115, the source change-information management unit 116, and the architecture information management unit 117. The information consistency check unit performs a consistency check process between the project plan information and the correspondence information, and then stores information in the correspondence database 125 through the correspondence information management unit 118. At this time, the information consistency check unit 113 can check the consistency based on the reliability of the correspondence relation estimated by the correspondence estimation processing unit 112.

The user interface 111 collects and displays information on the project from the process information management unit 114, the task information management unit 115, the source change-information management unit 116, the architecture information management unit 117, and the correspondence information management unit 118. At this time, the user interface 111 can display information for identifying the task associated with the process estimated by the correspondence estimation processing unit 112 along with the process information. In addition, the user interface 111 can display information on the task associated with the architecture estimated by the correspondence estimation processing unit 112 along with the architecture information. Further, the user interface 111 can display person-in-charge information of the architecture estimated by the correspondence estimation processing unit 112 along with the architecture information.

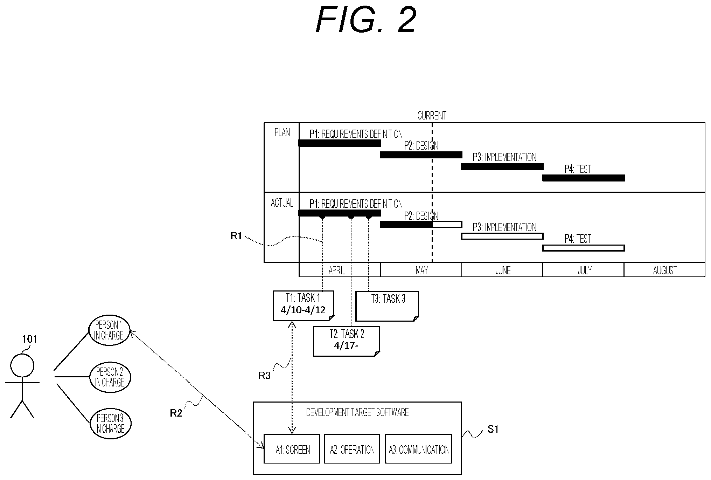

FIG. 2 is a diagram illustrating an example of a relation between the process, the task, and the architecture, which are managed by the project assistance system of FIG. 1.

In FIG. 2, for example, the project manager 101 defines a requirements definition P1, a design P2, implementation P3, and a test P4, as the process information of development target software S1. In addition, the project manager 101 usually defines a period of several weeks to several months for each process and registers the period in the process information.

In addition, the project manager 101 defines, for example, tasks T1 to T3 for executing the requirements definition P1, and assigns persons in charge 1 to 3 being development members to the tasks T1 to T3. The persons in charge 1 to 3 register the start and completion dates of the tasks T1 to T3 in the task information.

Further, the architect defines, for example, screens, operations, and communications as architecture components A1 to A3 in which the development target software S1 is divided into elements, and the defined elements are registered as architecture information. Then, the project manager 101 assigns the persons in charge 1 to 3 to the architecture components A1 to A3 and registers the assignment in the architecture information.

In addition, the persons in charge 1 to 3 generate change files related to the architecture components A1 to A3, and register the change files associated with the architecture components A1 to A3 in the source change information along with the name of the person in charge.

The project manager 101 determines the deliverables to be created in each process, and grasps the progress by observing the completed state of the deliverables. At this time, the project manager 101 can confirm how much the current process plan and actual results are different. When the deliverable is not completed, the end of the process may be extended, so the project manager 101 checks whether there is a task that is hindering the end of the process. In addition, basically, tasks belonging to the process are planned and executed. However, when a development failure occurs, the task may occur in a place not recognized by the project manager 101. In some cases, the relation between processes and tasks is not explicit.

Here, the correspondence estimation processing unit 112 estimates a correspondence relation R1 between the requirements definition P1 and the tasks T1 to T3, for example, based on the comparison result between the period of the requirements definition P1 and the start and completion dates of the tasks T1 to T3. The user interface 111 displays the correspondence relation R1 between the requirements definitions P1 and the tasks T1 to T3.

Thus, the project manager 101 can easily grasp the tasks T1 to T3 executed in the requirements definition P1 without defining the relation between the requirements definition P1 and the tasks T1 to T3. Therefore, while the amount of work of the project manager 101 is reduced, it is possible to reduce the oversight of the check of whether or not there is a task hindering the end of the process.

In addition, when the scale of the development target software S1 is large, it is common to decompose the software S1 to be developed into architecture components A1 to A3, and to divide the persons in charge 1 to 3 and perform development. Since the architecture components A1 to A3 that are easily developed change depending on the technical skills of the persons in charge 1 to 3, the project manager 101 assigns appropriate persons in charge 1 to 3 to the architecture components A1 to A3. However, if the development process is delayed, the persons in charge of other architecture components may help develop the own architecture component, and the assignment of architecture components A1 to A3 and the persons in charge 1 to 3 may be changed without recognition of the project manager 101.

Here, the correspondence estimation processing unit 112 estimates a correspondence relation R2 between the architecture components A1 to A3 and the persons in charge 1 to 3 who change the architecture components A1 to A3, for example, based on the comparison result between the storage positions of the architecture components A1 to A3 and the storage positions of the change files of the architecture components A1 to A3. The user interface 111 displays the correspondence relation R2 between the architecture components A1 to A3 and the persons in charge 1 to 3 who have changed the architecture components A1 to A3.

Thus, the project manager 101 can easily grasp the persons in charge 1 to 3 who have changed the architecture components A1 to A3 without defining the relevancy between the architecture components A1 to A3 and the persons in charge 1 to 3 who have changed the architecture components A1 to A3. Therefore, it is possible to reduce the amount of work of the project manager 101 and reduce the oversight when the persons in charge 1 to 3 change the architecture components A1 to A3.

In addition, the difficulty level of development may differ depending on the architecture components A1 to A3, and the difficulty level of development of the architecture components A1 to A3 has a relation with the working time of the tasks T1 to T3.

Here, the correspondence estimation processing unit 112 estimates a correspondence relation R3 between the architecture components A1 to A3 and the tasks T1 to T3, for example, based on the comparison result between the persons in charge 1 to 3 of the architecture components A1 to A3 and the persons in charge 1 to 3 of the tasks T1 to T3. At this time, the user interface 111 displays the correspondence relation R3 between the architecture components A1 to A3 and the tasks T1 to T3. Here, when there are architecture components and tasks that the same person is involved in, it can be estimated that the architecture components and tasks have a correspondence relation.

As a result, the project manager 101 can grasp the progress of the tasks T1 to T3 related to the development of the architecture components A1 to A3 without defining the relation between the architecture components A1 to A3 and the tasks T1 to T3. Therefore, while the amount of work of the project manager 101 is reduced, it is possible to check whether or not there are architecture components A1 to A3 that hinder the end of the process.

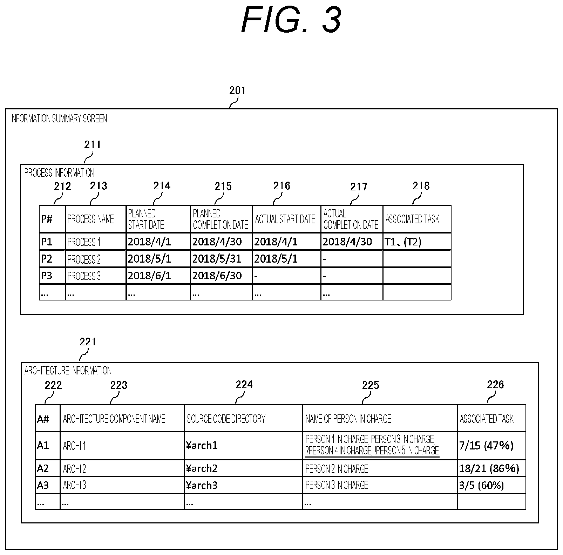

FIG. 3 is a diagram illustrating an example of an information summary screen displayed in the user interface of FIG. 1.

In FIG. 3, the user interface 111 of FIG. 1 displays an information summary screen 201. Process information 211 and architecture information 221 are displayed on the information summary screen 201. Identification information 212 for uniquely identifying each process, a process name 213, a planned start date 214, a planned completion date 215, an actual start date 216, an actual completion date 217, and an associated task 218 are registered in the process information 211.

The identification information 212, the process name 213, the planned start date 214, the planned completion date 215, the actual start date 216, and the actual completion date 217 are acquired from the process information database 121. The associated task 218 is acquired from correspondence database 125. When the reliability of the information estimated by the correspondence estimation processing unit 112 is low, the associated task 218 is displayed with () or in gray, and includes inaccurate information.

By checking the process information 211 displayed on the information summary screen 201, the project manager 101 can grasp the tasks related to the process, and can easily know the progress and the difficulty level of each process. In addition, by displaying the associated task 218 including inaccurate information, the project manager 101 can notice a sign that an event different from the plan is occurring.

Further, in the architecture information 221, identification information 222 for uniquely identifying each architecture, an architecture component name 223, a source code directory 224, a name 225 of a person in charge, and an associated task 226 are registered.

The identification information 222, the architecture component name 223, and the source code directory 224 are obtained from the task information database 122. The name 225 of the person in charge and the associated task 226 are acquired from the correspondence database 125. In the name 225 of the person in charge, the persons in charge 1 and 3 are registered by the project manager 101. Persons in charge 4 and 5 are persons in charge which are not registered by the project manager 101. The persons in charge 4 and 5 are estimated by the correspondence estimation processing unit 112. The persons in charge 4 and 5, which are not registered by project manager 101, are underlined. When the reliability of the information estimated by the correspondence estimation processing unit 112 is low, the information is displayed with ?. When the reliability of the estimated information is high, the information is displayed with !.

The associated task 226 is displayed by summing the number of tasks corresponding to the architecture components. For example, the associated task 226 is displayed in a fractional format or % with the number of tasks for which the actual completion date is not input as the numerator and the total number of tasks as the denominator.

By checking the architecture information 221 displayed on the information summary screen 201, the project manager 101 can easily know whether or not an unplanned person in charge is performing work related to the architecture component. By displaying the name 225 of the person in charge, including inaccurate information, the project manager 101 can notice signs that an event different from the plan is occurring. In addition, the project manager 101 can grasp the tasks related to the architecture components, and can easily know the work progress and the degree of completion of each architecture component.

A method of generating the process information 211 and the architecture information 221 displayed on the information summary screen 201 of FIG. 3 will be specifically described below.

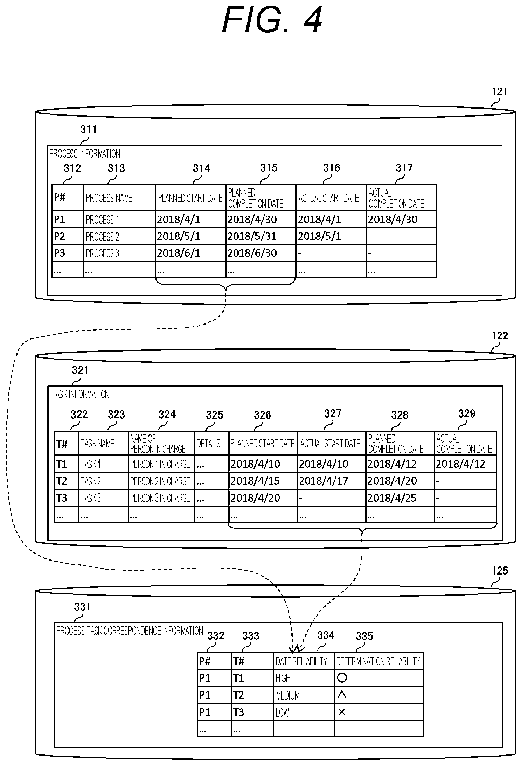

FIG. 4 is a diagram illustrating an example of a method of constructing the correspondence database according to the first embodiment. Note that FIG. 4 illustrates a method of adding the associated task 218 to the process information 211 of FIG. 3.

In FIG. 4, the process information database 121 stores the process information 311. The task information 321 is stored in the task information database 122. The correspondence estimation processing unit 112 generates process-task correspondence information 331 based on the comparison result between the process information 311 and the task information 321 and stores the generated information in the correspondence database 125 through the correspondence information management unit 118.

Identification information 312 for uniquely identifying each process, a process name 313, a planned start date 314, a planned completion date 315, an actual start date 316, and an actual completion date 317 are registered in the process information 311. Identification information 332 for uniquely identifying each task, a task name 323, a name of a person in charge 325, details 325 of a task, a planned start date 326, an actual start date 327, a planned completion date 328, and an actual completion date 329 are registered in the task information 321. In the process-task correspondence information 331, identification information 332 for uniquely identifying each process, identification information 333 for uniquely identifying each task, date reliability 334, and determination reliability 335 are registered.

The date reliability 334 is the reliability when the correspondence relation between the process and the task is estimated based on the comparison result between the date of the process information 311 and the date of the task information 321. The determination reliability 335 is reliability when there are a plurality of comparison items between the process information 311 and the task information 321, and the comparison result between the process information 311 and the task information 321 is comprehensively determined to estimate the correspondence relation between the process and the task. When there is one comparison item between the process information 311 and the task information 321, the date reliability 334 and the determination reliability 335 can be equal to each other.

At this time, the correspondence estimation processing unit 112 performs rule-based estimation of comparing the date of the process information 311 with the date of the task information 321. Here, the correspondence estimation processing unit 112 can calculate the date reliability 334 of the correspondence relation between the process and the task based on the coincidence degree of the dates and whether or not the actual date is written. For example, for the coincidence degree, the inclusion relation or the duplication rate between the work period indicated by the date of the process information 311 and the work period indicated by the date of the task information 321 may be used.

For example, when the planned start date 325 and the planned completion date 327 of the task information 321, and the actual start date 326 and the actual completion date 328 of the task information 321 are set between the planned start date 313 and the planned completion date 314 of the process information 311, the date reliability 334 of the process-task correspondence information 331 is set to high. In the example of FIG. 4, the process P1 and the task T1 satisfy this condition. Therefore, the date reliability 334 of the process-task correspondence information 331 is set high for the combination of the process P1 and the task T1.

When the planned start date 325 and the planned completion date 327 of the task information 321 are set between the planned start date 313 and the planned completion date 314 of the process information 311, but the actual completion date 328 of the task information 321 is not input, and the task is not completed, the date reliability 334 is set to be medium. In the example of FIG. 4, process P1 and task T2 satisfy this condition. Therefore, the date reliability 334 of the process-task correspondence information 331 is set to be medium for the combination of the process P1 and the task T2.

When the planned start date 325 of the task information 321 is set between the planned start date 313 and the planned completion date 314 of the process information 311, but the actual start date 326 is not input and the task is not started, the date reliability 334 is set to low. In the example of FIG. 4, the process P1 and the task T3 satisfy this condition. Therefore, the date reliability 334 of the process-task correspondence information 331 is set to low for the combination of the process P1 and the task T3. The example described here is a very simple example, but the date reliability 334 may be calculated in accordance with various rules.

Then, the correspondence estimation processing unit 112 calculates the determination reliability 335 which is finally determined by combining a plurality of reliabilities. In the example of FIG. 4, when the date reliability 334 is high, the determination reliability 335 is set to ○. When the date reliability 334 is medium, the determination reliability 335 is set to Δ. When the date reliability 334 is low, the determination reliability 335 is set to ×.

The correspondence estimation processing unit 112 compares the date of the process information 311 with the date of the task information 321 for all the processes registered in the process information 311 and all the tasks registered in the task information 321. The correspondence estimation processing unit calculates the determination reliability 335 for all combinations of the processes and the tasks.

The user interface 111 of FIG. 1 displays the associated task 218 on the information summary screen 201 of FIG. 3 based on the determination reliability 335. In the example of FIG. 3, when the determination reliability 335 is ○, the associated task is displayed in black. When the determination reliability 335 is Δ, the associated task is displayed in gray with parentheses. When the determination reliability 335 is ×, the associated task is not displayed.

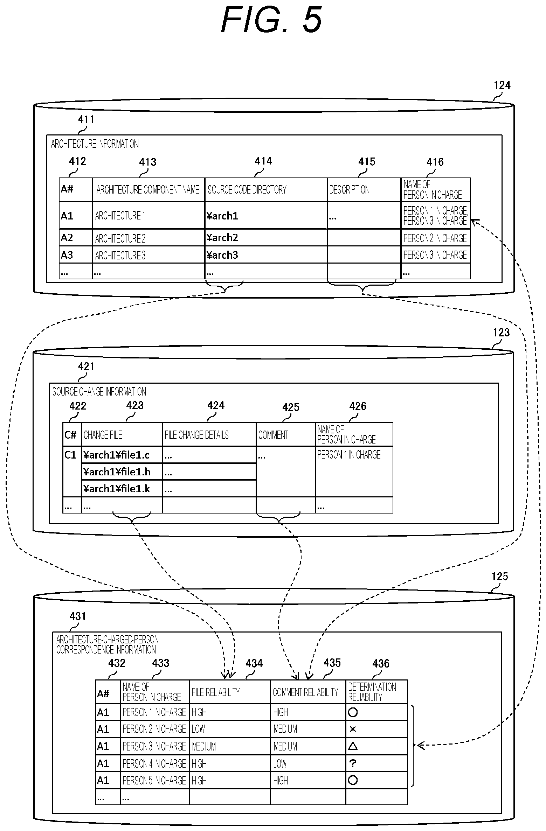

FIG. 5 is a diagram illustrating an example of a method of constructing a correspondence database according to a second embodiment. Note that, FIG. 5 illustrates a method of adding the name 225 of the person in charge to the architecture information 221 of FIG. 3.

In FIG. 5, the architecture information database 124 stores architecture information 411. The source change-information database 123 stores the source change information 421. The correspondence estimation processing unit 112 generates architecture-charged-person correspondence information 431 based on a comparison result between the architecture information 411 and the source change information 421, and stores the generated information in the correspondence database 125 through the correspondence information management unit 118.

Identification information 412 for uniquely identifying the architecture component, an architecture component name 413, a source code directory 414 indicating the storage location of the architecture component, a description 415 of the architecture component, and a name of a person in charge 416 are registered in the architecture information 411. In the source change information 421, identification information 422 for uniquely identifying the change made by the person in charge, a change file 423, file change details 424, a comment 425 of the file change details, and a name 426 of a person in charge are registered. The file path of the change file 422 is registered in the change file 422. Identification information 432 for uniquely identifying the architecture component, a name of a person in charge 433, file reliability 434, comment reliability 435, and determination reliability 436 are registered in the architecture-charged-person correspondence information 431.

The file reliability 434 is reliability when the correspondence relation between the architecture and the person in charge is estimated based on the comparison result between the source code directory 414 of the architecture information 411 and the change file 423 of the source change information 421. The comment reliability 435 is reliability when the correspondence relation between the architecture and the person in charge is estimated based on the comparison result between the description 415 of the architecture information 411 and the comment 425 of the source change information 421. The determination reliability 335 is the reliability when the file reliability 434 and the comment reliability 435 are comprehensively determined to estimate the correspondence relation between the architecture and the person in charge.

When obtaining the file reliability 434, the correspondence estimation processing unit 112 performs a rule-based estimation of comparing the file path of the architecture information 411 with the file path of the source change information 421. For example, in the architecture information 411, the source code directory 413 of the architecture A1 is \arch1. On the other hand, it is assumed that, in one change C1 of the source change information 421, the person in charge 1 creates file1.c, file1.h, and file1.k as the change file 423, and deploys file1.c, file1.h and file1.k under /arch1. At this time, a probability that the person in charge 1 who has made the change C1 is in charge of the architecture component A1 is high. Therefore, for the combination of the architecture component A1 and the person in charge 1, the file reliability 434 of the architecture-charged-person correspondence information 431 is set to high.

In addition, in the source change information 421, it is assumed that most of the change files created by the person in charge 2 belong to various architectures. At this time, a probability that the person in charge 2 who has made the change is in charge of the architecture A1 is low. Therefore, for the combination of the architecture component A1 and the person in charge 2, the file reliability 434 of the architecture-charged-person correspondence information 431 is set to low. In this case, a rule with a threshold value for determining the ratio of the number of files belonging to the architecture component may be used. For example, when the ratio of change files 422 belonging to the same architecture component is 30% or less, the file reliability 434 can be set to low.

In addition, in the source change information 421, it is assumed that most of the change files created by the person in charge 3 belong to the architecture component A1 and some belong to other architecture components. At this time, a probability that the person in charge 3 who has made the change is the person in charge of the architecture component A1 is between high and low. Therefore, for the combination of the architecture component A1 and the person in charge 3, the file reliability 434 of the architecture-charged-person correspondence information 431 is set to medium. In this case, a rule with a threshold value for determining the ratio of the number of files belonging to the architecture component may be used. For example, when the ratio of change files 422 belonging to the same architecture component is 80% or more, the file reliability 434 can be set to medium.

In addition, in the source change information 421, it is assumed that all the change files created by the person in charge 4 belong to the architecture component A1. At this time, for the combination of the architecture component A1 and the person in charge 4, the file reliability 434 of the architecture-charged-person correspondence information 431 is set to high.

In addition, in the source change information 421, it is assumed that all the change files created by the person in charge 5 belong to the architecture component A1. At this time, for the combination of the architecture component A1 and the person in charge 5, the file reliability 434 of the architecture-charged-person correspondence information 431 is set to high.

When obtaining the comment reliability 435, the correspondence estimation processing unit 112 performs machine learning-based estimation using a string similarity between the description 415 of the architecture information 411 and the comment 425 of the source change information 421. For example, the correspondence estimation processing unit performs machine learning of a vector for calculating the similarity between the description 415 of the architecture information 411 and the comment 425 of the source change information 421 in advance using a separate data set. The correspondence estimation processing unit obtains the probability related to the architecture component A1 by the similarity calculation using the learning vector at this time, and determines the degree of the comment reliability as the probability that the person in charge of the change C1 is related to the architecture A1.

For example, in the architecture information 411, it is assumed that "it is a function of the screen." is described in the description 415 of the architecture component A1. In addition, in the source change information 421, it is assumed that "the display mode of the screen function has been added." is described in the comment 425 of the change C1. In this case, the character string "screen" is the same between the description 415 of the architecture information 411 and the comment 425 of the source change information 421. Therefore, for the combination of the architecture component A1 and the person in charge 1, the comment reliability 435 of the architecture-charged-person correspondence information 431 is set to high. The example described here is a very simple example, but the reliability may be calculated in accordance with various rules.

Then, the correspondence estimation processing unit 112 calculates the determination reliability 436 which is finally determined by combining a plurality of reliabilities. In the example of FIG. 5, when the file reliability 434 is high and the comment reliability 435 is high, the determination reliability 436 is ○. When the file reliability 434 is medium and the comment reliability 435 is medium, the determination reliability 436 is Δ. When both the file reliability 434 and the comment reliability 435 are low, or when one is medium and the other is low, the determination reliability 436 is set to ×. When the file reliability 434 and the comment reliability 435 are high and low and the judgment is broken, the determination reliability is set as ?.

The correspondence estimation processing unit 112 compares the source code directory 414 of the architecture information 411 with the change file 423 of the source change information 421 for all architecture components registered in the architecture information 411 and all the changes registered in the source change information 421. The correspondence estimation processing unit compares the description 415 of the architecture information 411 with the comment 425 of the source change information 421 and calculates the determination reliability 436 for all combinations of the architecture components and the persons in charge.

The user interface 111 of FIG. 1 displays the name 225 of the person in charge on the information summary screen 201 of FIG. 3 based on the determination reliability 436. At this time, the person in charge 2 whose determination reliability 436 is × is not displayed in the name 225 of the person in charge. The persons in charge 1 and 5 with the determination reliability 436 of ○, **the person in charge** 3 with a determination reliability 436 of Δ, **and the person in** charge 4 with a determination reliability 436 of ? displayed in the person in the name 225 of the person in charge.

In addition, the information consistency check unit 113 checks the consistency between the name of the person in charge 433 for the architecture component set in the architecture-charged-person correspondence information 431 and the name of the person in charge 416 for the architecture component defined in advance in the architecture information 411. Then, the user interface 111 changes the display mode of the name 225 of the person in charge displayed on the information summary screen 201 based on the confirmation result of this consistency.

For example, in the information summary screen 201 of FIG. 3, the persons in charge 1 and 3 included in the predetermined person in charge 416 and having a determination reliability 436 of Δ or more are displayed as usual. This normal display can be set as the default. Persons in charge 5 who are not included in the predefined person in charge 415 and whose determination reliability 436 is Δ or hi gher are considered to have performed work different from the plan and are highlighted with a deficit !. The person in charge 4 who is not included in the predefined person in charge 415 and has a determination reliability 436 of ? is highlighted with a deficit ? mark for reference information. This is just one example, and the actual examples are not limited to this.

The project manager 101 can grasp the occurrence of an unexpected situation by checking the display of the persons in charge 4 and 5 different from the plan on the information summary screen 201 for the architecture component A1. Then, the project manager 101 can go to the person in charge 4 or 5 and ask why he/she is working on the architecture component A1 and can deal with an unexpected situation.

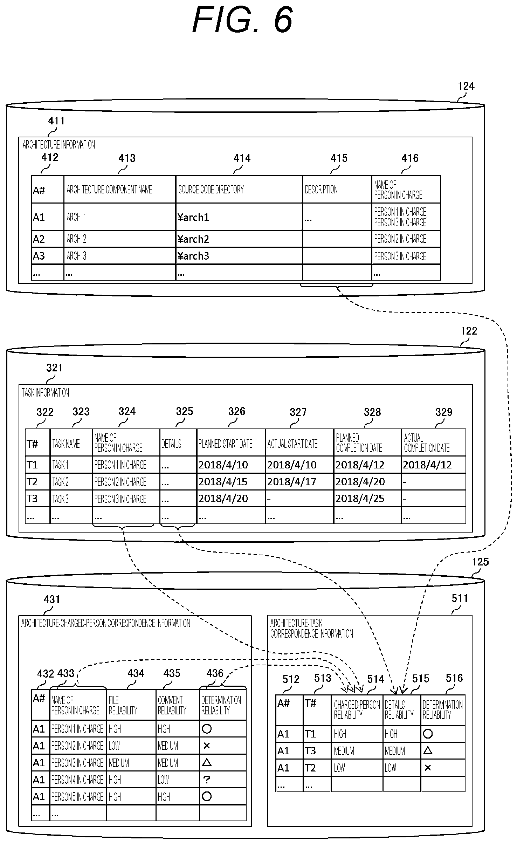

FIG. 6 is a diagram illustrating an example of a method of constructing a correspondence database according to a third embodiment. Note that FIG. 6 illustrates a method of adding the associated task 226 to the architecture information 221 of FIG. 3.

In FIG. 6, the architecture information database 124 stores the architecture information 411. The task information 321 is stored in the task information database 122. Correspondence relation database 125 stores architecture-charged-person correspondence information 431. The correspondence estimation processing unit 112 generates the architecture-task correspondence information 511 based on the comparison result between the task information 321 and the architecture-charged-person correspondence information 431 and the comparison result between the task information 321 and the architecture information 411. Then, it is stored in the correspondence database 125 via the correspondence information management unit 118.

Identification information 512 for uniquely identifying the architecture component, identification information 513 for uniquely identifying the task, charged-person reliability 514, content reliability 515, and determination reliability 516 are registered in the architecture-task correspondence information 511.

The charged-person reliability 514 is reliability when the correspondence relation between the architecture component and the task is estimated based on a comparison result between the name of the person in charge 324 of the task information 321, and the name 433 of the person in charge in consideration of the determination reliability 436 of the architecture-charged-person correspondence information 431. The content reliability 515 is the reliability when the correspondence relation between the architecture component and the task is estimated based on the comparison result between the details 325 of the task information 321 and the description 415 of the architecture information 411. The determination reliability 516 is the reliability when the correspondence relation between the architecture and the element task is estimated by comprehensively judging the charged-person reliability 514 and the content reliability 515.

When obtaining the charged-person reliability 514, the correspondence estimation processing unit 112 performs a rule-based estimation of comparing the name of the person in charge 324 of the task information 321 with the name of the person in charge 433 in consideration of the determination reliability 436 of the architecture-charged-person correspondence information 431. For example, the correspondence estimation processing unit uses the name of the person in charge 324 of the task information 321, and the name 433 of the person in charge of the architecture-charged-person correspondence information 431, and the determination reliability 436, so as to calculate the charged-person reliability 514 in association with the architecture A#512 with the task T#513. The name of the person in charge is used as the key for the association, but since the determination reliability 436 of the architecture-charged-person correspondence information 431 varies, the determination reliability 436 is added.

For example, in the architecture-charged-person correspondence information 431, the determination reliability 436 in which the charge 1 is in charge of the architecture component A1 is ○. On the other hand, in the task information 321, the person in charge 1 is in charge of the task T1. Therefore, assuming that the task T1 has a high probability of being a work related to the architecture component A1, the charged-person reliability 514 for the combination of the architecture component A1 and the task T1 in the architecture-task correspondence information 511 is set to high.

Further, in the architecture-charged-person correspondence information 431, the determination reliability in which the person in charge 3 is in charge of the architecture component A1 is Δ. On the other hand, in the task information 321, the person in charge 3 is in charge of the task T3. Therefore, assuming that the probability that the task T3 is the work related to the architecture component A1 is medium, the charged-person reliability 514 for the combination of the architecture component A1 and the task T3 of the architecture-task correspondence information 511 is set to medium.

Further, in the architecture-charged-person correspondence information 431, the determination reliability in which the person in charge 2 is in charge of the architecture component A1 is ×. On the other hand, in the task information 321, the person in charge 2 is in charge of the task T2. Therefore, assuming that the probability that the task T2 is the work related to the architecture component A1 is low, the charged-person reliability 514 for the combination of the architecture component A1 and the task T2 in the architecture-task correspondence information 511 is set to low.

When obtaining the content reliability 515, the correspondence estimation processing unit 112 performs machine learning-based estimation using a string similarity between the details 325 of the task information 321 and the description 415 of the architecture information 411. For example, the description 415 of the architecture information 411 and the vector for calculating the similarity of the details 325 of the task information 321 are machine-learned as separate data sets in advance, and the task T1 is calculated by the similarity calculation using the learning vector at that time. Find the probabilities related to architecture A1 and determine the high, medium, and low content reliability of 515.

For example, in the architecture information 411, it is assumed that "it is a function of the screen." is described in the description 415 of the architecture component A1. In addition, in the task information 321, it is assumed that the details 325 of the task T1 states "The display mode of the screen function has been added". In this case, the character string "screen" is the same between the description 415 of the architecture information 411 and the details 325 of the task information 321. Therefore, the content reliability 515 of the architecture-task correspondence information 511 is set high for the combination of the architecture component A1 and the task T1. The example described here is a very simple example, but the reliability may be calculated in accordance with various rules.

Then, the correspondence estimation processing unit 112 calculates the determination reliability 516 which is finally determined by combining a plurality of reliabilities. In the example of FIG. 6, when the charged-person reliability 514 is high and the content reliability 515 is high, the determination reliability 516 is ○. When the charged-person reliability 514 is medium and the content reliability 515 is medium, the determination reliability 516 is Δ. When both the charged-person reliability 514 and the content reliability 515 are low, or when one is medium and the other is low, the determination reliability 516 is ×.

The correspondence estimation processing unit 112 compares the name of the person in charge 324 of the task information 321 with the name of the person in charge 433 of the architecture-charged-person correspondence information 431 for all the task registered in the task information 321 and all the architecture components registered in the architecture-charged-person correspondence information 431. The correspondence estimation processing unit compares the details 325 of the task information 321 with the description 415 of the architecture information 411 for all the task registered in the task information 321 and all the architecture components registered in the architecture information 411, and calculates the determination reliability 516 for all combinations of the architecture components and the tasks.

The user interface 111 of FIG. 1 displays the associated task 226 on the information summary screen 201 of FIG. 3 based on the determination reliability 516. At this time, only the tasks having a determination reliability 516 of ○ **may be aggregated, or the tasks of Δ or more may be** aggregated. The project manager 101 can set the display contents of the associated task 226 according to the characteristics of the development project and the accuracy of the association estimation method.

As described above, according to the above-described embodiment, it is possible to estimate the correspondence relation between the project plan information and the project execution information based on the process information 311 obtained from the development process management system 102, the task information 321 obtained from the task management system 103, the source change information 421 obtained from the source code configuration management system 104, and the architecture information 411 obtained from the architecture design information 105. In addition, it is possible to check the information consistency and display information of the project to the project manager 101.

By looking at the displayed project information, the project manager 101 can easily grasp the development project status that the project manager 101 constantly performs, and can detect that a problem has occurred in the development project in a short time. By reducing the work man-hours of the project manager 101 and improving the judgment accuracy of the project manager, the problem-solving ability of the project manager 101 can be improved and the problem occurrence probability of the development project can be reduced. By reducing the probability of problems occurring in development projects, project manager 101 can meet software release deadlines, reduce unnecessary increases in development costs, and increase the probability of success in development projects.

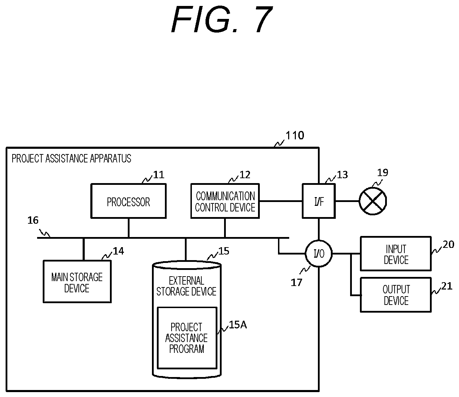

FIG. 7 is a block diagram illustrating an example of a hardware configuration of the project assistance device of FIG. 1.

In FIG. 7, the project assistance device 110 includes a processor 11, a communication control device 12, a communication interface 13, a main storage device 14, and an external storage device 15. The processor 11, the communication control device 12, the communication interface 13, the main storage device 14, and the external storage device 15 are connected to each other via an internal bus 16. The main storage device 14 and the external storage device 15 are accessible from the processor 11.

Further, an input device 20 and an output device 21 are provided outside the project assistance device 110. The input device 20 and the output device 21 are connected to the internal bus 16 via an input and output interface 17.

The input device 20 is, for example, a keyboard, a mouse, a touch panel, a card reader, a voice input device, or the like. The output device 21 is, for example, a screen display device (liquid crystal monitor, organic EL (Electro Luminescence) display, graphic card, and the like), an audio output device (speaker and the like), a printing device, and the like.

The processor 11 is hardware that controls the operation of the entire project assistance device 110. The main storage device 14 can be configured by, for example, a semiconductor memory such as SRAM or DRAM. The main storage device 14 can store a program being executed by the processor 11 or provide a work area for the processor 11 to execute the program.

The external storage device 15 is a storage device having a large storage capacity, and is, for example, a hard disk device or an SSD (Solid State Drive). The external storage device 15 can hold executable files of various programs and data used for executing the programs. The project support program 15A can be stored in the external storage device 15. The project support program 15A may be software that can be installed in the project assistance device 110, or may be incorporated as firmware in the project assistance device 110.

The communication control device 12 is hardware having a function of controlling communication with the outside. The communication control device 12 is connected to a network 19 via the communication interface 13. The network 19 may be a WAN (Wide Area Network) such as the Internet, a LAN (Local Area Network) such as WiFi, or a mixture of WAN and LAN.

The input and output interface 17 converts the data input from the input device 20 into a data format that can be processed by the processor 11, and converts the data output from the processor 11 into a data format that can be output by the output device 21.

Since the processor 11 reads the project support program 15A into the main storage device 14 and executes the project support program 15A, it is possible to calculate the correspondence information between the project plan information and the project execution information based on the comparison result between the project plan information and the project execution information.

At this time, the project support program 15A can realize the functions of the correspondence estimation processing unit 112, the information consistency check unit 113, the process information management unit 114, the task information management unit 115, the source change-information management unit 116, the architecture information management unit 117, and the correspondence information management unit 118 in FIG. 1.

Note that, the execution of the project support program 15A may be shared by a plurality of processors and computers. Alternatively, the processor 11 may instruct a cloud computer or the like to execute all or a portion of the project support program 15A via the network 19 and receive the execution result.

### Reference Signs List

- 101: project manager
- 102: development process management system
- 103: task management system
- 104: source code configuration management system
- 105: architecture design information
- 110: project manager assistance system
- 111: user interface
- 112: correspondence estimation processing unit
- 113: information consistency check unit
- 114: process information management unit
- 115: task information management unit
- 116: source change-information management unit
- 117: architecture information management unit
- 118: correspondence information management unit
- 120: storage device
- 121: process information database
- 122: task information database
- 123: source change-information database
- 124: architecture information database
- 125: correspondence database

## Claims

1. A project assistance system that calculates a state of a project by using a plurality of pieces of management information, the system comprising:
a processor; and
a storage device,
wherein the storage device stores
project plan information in which a plan of the project is described, and
project execution information in which execution of the project is described, and
the processor
calculates correspondence information between the project plan information and the project execution information along with a reliability of a correspondence relation, and
outputs information of the project along with the reliability of the correspondence relation, based on the correspondence information.

2. The project assistance system according to claim 1, wherein
the plurality of pieces of management information include process information and task information,
the project plan information is the process information including information on a work planned date and an actual work date for each process,
the project execution information is the task information including information on the work planned date and an actual work date for each task, and
the processor associates the process and the task with each other based on the work planned date and the actual work date to create the correspondence information.

3. The project assistance system according to claim 2, wherein the reliability is calculated based on a coincidence degree of the dates and whether or not the actual date is written.

4. The project assistance system according to claim 1, wherein
the project plan information is architecture information including an architecture and directory information for storing the architecture,
the project execution information is source change information including information on a directory in which a source is changed and person-in-charge information of a charged person who changes the source, and
the processor associates the architecture and the source change with each other based on the directory information of the architecture information and the directory information of the source change information, so as to create the correspondence information.

5. The project assistance system according to claim 4, wherein
the architecture information includes a description of the architecture,
the source change information includes a comment of the charged person who changes the source, and
the processor creates the correspondence information further by using the description of the architecture and the comment of the charged person.

6. The project assistance system according to claim 1, wherein
the project plan information stores
architecture information including information on an architecture and person-in-charge information, and
task information including information on a task, a work record, and person-in-charge information, and
the processor
calculates a relation between the architecture and the task based on the architecture information and the task information, and
creates the correspondence information based on the person-in-charge information of the architecture information and the person-in-charge information of the task information.

7. The project assistance system according to claim 6, wherein
the architecture information includes a description of the architecture,
the task information includes a comment of a charged person who performs the task, and
the processor creates the correspondence information further by using the description of the architecture and the comment of the charged person.

8. The project assistance system according to claim 1, wherein
the project plan information stores
architecture information in which information on an architecture is described, and
task information including information on a task and a work record, and
the processor
calculates a relation between the architecture and the task based on the architecture information and the task information, and
creates a progress status of a work related to the architecture, based on the architecture information and the work record of the task information.

9. The project assistance system according to claim 5, wherein
the processor
checks consistency between the project plan information and the correspondence information, and
outputs the person-in-charge information and a check result of the consistency along with the architecture information.

10. The project assistance system according to claim 2, wherein the processor outputs information for specifying a task associated with the process, along with the process information.

11. The project assistance system according to claim 8, wherein the processor causes information regarding a task associated with the architecture to be displayed, along with the architecture information.

12. A project assistance device that compares project plan information in which a plan of a project is described with project execution information in which execution of the project is described, and calculates correspondence information between the project plan information and the project execution information based on a result of the comparison.

13. The project assistance device according to claim 12, wherein
the correspondence information includes
a correspondence relation between a process included in the project plan information and a task included in the project execution information,
a correspondence relation between an architecture included in the project plan information and a charged person who changes an architecture included in the project execution information, and
a correspondence relation between the architecture included in the project plan information and the task included in the project execution information.

14. A project assistance method of calculating a state of a project by using a plurality of pieces of management information, wherein
a processor and a storage device are provided,
the storage device stores
project plan information in which a plan of the project is described, and
project execution information in which a work of the project is described, and
the processor
calculates correspondence information between the project plan information and the project execution information along with a reliability of a correspondence relation, and
outputs information of the project along with the reliability of the correspondence relation, based on the correspondence information.
